## Europäisches Patentamt
## European Patent Office
## Office européen des brevets

(11) Veröffentlichungsnummer: **0 010 324**
**A1**

# (12) EUROPÄISCHE PATENTANMELDUNG

(21) Anmeldenummer: 79200560.5

(22) Anmeldetag: 03.10.79

(51) Int. Cl.³: **G 01 J 5/42**
**G 02 B 23/12**

(30) Priorität: 07.10.78 DE 2843876

(43) Veröffentlichungstag der Anmeldung:
30.04.80 Patentblatt 80/9

(84) Benannte Vertragsstaaten:
CH DE FR GB IT

(71) Anmelder: **Philips Patentverwaltung GmbH**
**Steindamm 94**
**D-2000 Hamburg 1(DE)**

(84) Benannte Vertragsstaaten:
**DE**

(71) Anmelder: **N.V. Philips' Gloeilampenfabrieken**
**Emmasingel 29**
**NL-5611 AZ Eindhoven(NL)**

(84) Benannte Vertragsstaaten:
**CH FR GB IT**

(72) Erfinder: **Dietz, Wolfgang**
**Gaussstrasse 78**
**D-2804 Lilienthal(DE)**

(74) Vertreter: **Poddig, Dieter et al,**
**Philips Patentverwaltung GmbH Steindamm 94**
**D-2000 Hamburg 1(DE)**

(54) **Wärmebildgerät mit pneumatischen IR-Detektoren.**

(57) Das Wärmebild enthält ein Mosaik von pneumatischen IR-Detektoren, von denen jede vorzugsweise als Mikrogaszelle 5' ausgebildet ist. Auf dieses Mosaik wird von der einen Seite das Wärmebild projiziert und führt zu wärmeabhängiger Ausdehnung des Gases in den Zellen. Auf der gegenüberliegenden Betrachtungsseite sind die Zellen mit einer Kunststoff-Folie 11 überzogen, so daß ein Gasaustausch zwischen den Zellen nicht möglich ist. In geringem Abstand vor der Betrachtungsseite ist eine Referenzplatte 9 angeordnet, die mit optischem Licht angestrahlt wird. Durch die Verformung der Kunststoff-folie infolge der Gasausdehnung in den Zellen ergeben sich Interferenzmuster, durch die das Wärmebild sichtbar wird.

Fig. 2

"Wärmebildgerät mit pneumatischen IR-Detektoren"

Die Erfindung bezieht sich auf ein Wärmebildgerät zur optischen Erkennung von Wärmebildszenen mit pneumatischen Ir-Detektoren, z.B. thermisch beeinflußbaren Gaszellen.

Wärmebildszenen mittels IR-Detektoren aufzunehmen und in optische bzw. elektronische Signale umzusetzen ist z.B. aus der DE-OS 25 34 586 bekannt. Dabei wird die Wärmebildszene entsprechend abgetastet und aus der von dem oder den IR-Detektoren aufgenommenen Strahlung eine elektrische Signalspannung abgeleitet, mit der z.B. Leuchtdioden oder Displays angesteuert werden, die das Wärmebild optisch wiedergeben.

Die bekannten hochempfindlichen IR-Detektoren erfordern einerseits eine Kühlung, die weit unterhalb der Raumtemperatur liegt, Wärmebildgeräte mit solchen Detektoren andererseits einen erheblichen Aufwand für die Ablenk- bzw. Abtastmittel.

Es ist zwar aus "Review of Scientific Instruments", Vol. 20 Nr. 11, Nov. 1949, Seite 816 ff bekannt, in der Spektrometrie eine thermisch beeinflußbare Gaszelle als pneumatischen IR-Detektor oder Sensor, z.B. eine Golay-Zelle, zu verwenden. Dabei werden Änderungen eines von der Wärmestrahlung beeinflußten Gases in mechanische und optische Änderungen eines Spiegels umgesetzt, aus denen ein Spektrum der Temperaturstrahlung erhalten werden kann, indem ein Strich-Gitterbild gegenüber einem festen Strichgitter verschoben wird.

Für die optische Erkennung von Wärmezielen in einer Bildszene bzw. einer Wärmebildszene sind aber Anordnungen mit
dieser bekannten Gaszelle als IR-Sensor nicht geeignet,
da die für die Spektralanalyse erforderliche Spiegelkonstruktion und der Strichgitteraufbau für ein Wärmebildgerät viel zu aufwendig sind, um eine störungsfreie Erkennung von Wärmezielen zu erhalten und vor allem über längere Zeiten beizubehalten.

Aufgabe der Erfindung ist es, ein Wärmebildgerät der eingangs genannten Art zu schaffen, das mit geringerem Aufwand und ohne Szenenabtastung, d.h. nur mit statischen
Mitteln, eine einwandfreie optische Wiedergabe von Wärmebildszenen gestattet.

Gelöst wird diese Aufgabe dadurch, daß ein auf einer Ir-
durchlässigen Platte angebrachtes, die Wärmebildszene aufnehmendes Mosaik von pneumatischen IR-Detektoren vor einer in ihrer Neigung einstellbaren mit optischem Licht angestrahlten Referenzplatte angeordnet ist, deren Interferenzmuster durch ein optisches System aufgenommen werden.

Vorteilhaft ist es, wenn die Mikrogaszellen aus beidseitig
mit Interferenzqualität plangeschliffenen und polierten
Glaskapillaren bestehen.

Um die thermische Drift, welche sonst durch Choppen ausgeschaltet wird, zu unterdrücken, ist es vorteilhaft, die
IR-durchlässige Germaniumplatte, ein Etalon und die keilförmige Referenzplatte mit ihren polierten Oberflächen
zusammenzusprengen, so daß eine hermetisch dichte Kammer
gebildet wird, in welcher sich die Kanalplatte mit den abgeschlossenen Mikrogaszellen befindet.

Ein Vorteil des neuen Wärmebildgerätes liegt darin, daß
der Wellenbereich, für den das Gerät bzw. die Sensoren
höchstempfindlich sind, weit ausgedehnter ist als bei denen mit IR-Detektoren, die z.B. individuell jedem atmosphärischen Fenster angepaßt werden müssen. Ferner braucht die Ansprechzeit der Sensoren nicht in der Größenordnung von Mikrosekunden zu liegen, sondern sie kann weit größer sein, während die Arbeitstemperatur bei Raumtemperaturen liegt und somit keine Kühlung erforderlich ist.

Die Zeichnung stellt ein Ausführungsbeispiel dar.
Es zeigen

Fig. 1 einen schematischen Aufbau des Gerätes;

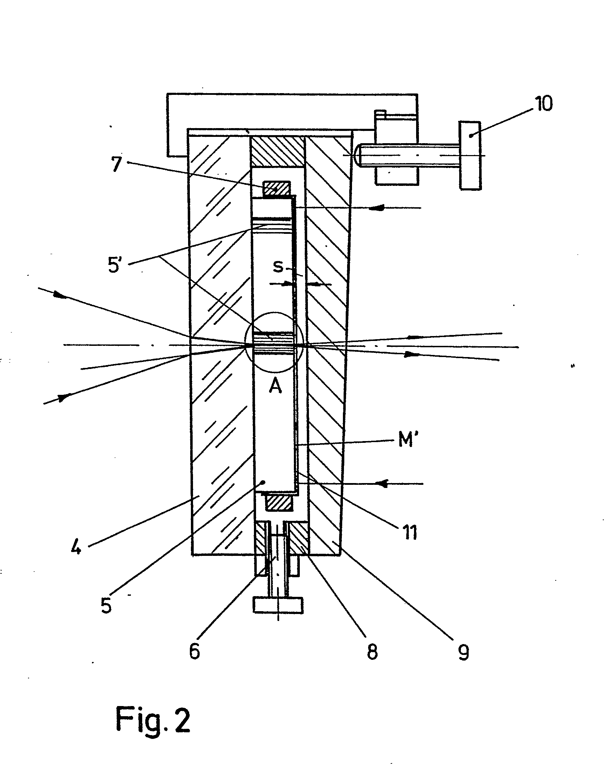

Fig. 2 einen schematischen Schnitt durch die Bildwandlereinheit und

Fig. 3 einen vergrößerten Ausschnitt aus der Fig. 2.

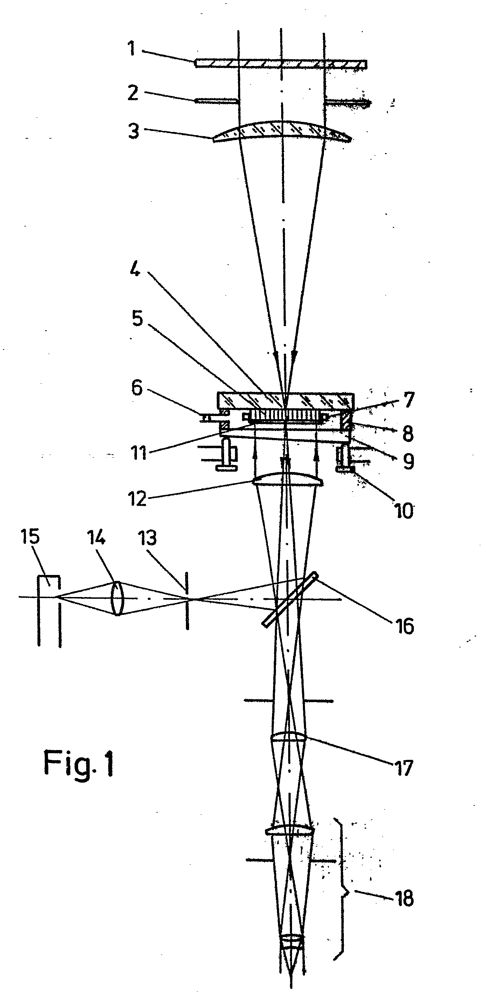

Nach Fig. 1 wird die zu beobachtende Szene durch eine Ge-Linse 3 auf die Rückseite einer IR-durchlässigen Platte, z.B. Ge-Platte 4, abgebildet. Durch ein Schutzfilter 1 und eine Irisblende 2 vor der Ge-Linse 3 kann das Bildwandlergerät gegen Überlastung geschützt werden. Auf der Germanium-Platte 4 ist eine aus einem Mosaik von Mikrogaszellen 5' bestehende Kanalplatte 5 angebracht, die beidseitig mit Interferenzqualität plangeschliffen und poliert ist. Um die Absorption von IR-Strahlung durch das Glas zu reduzieren, ist die Seite, welche an die Ge-Platte 4 gesprengt wird, metallbedampft 4' und mit einer Quarzschutzschicht 4" versehen. Auf der gegenüberliegenden Seite befindet sich eine Kunststoff-Folie 11, die durch Adhäsion oder Spannung mit einer Klemmvorrichtung 7 mit der Kanalplatte 5 so verbunden ist, daß zwischen den einzelnen kapillarartigen Mikrogaszellen 5 kein Gasaustausch möglich ist. Die äußere Seite der Kunststoff-Folie 11 ist zur

4 PHD 78-133 EP

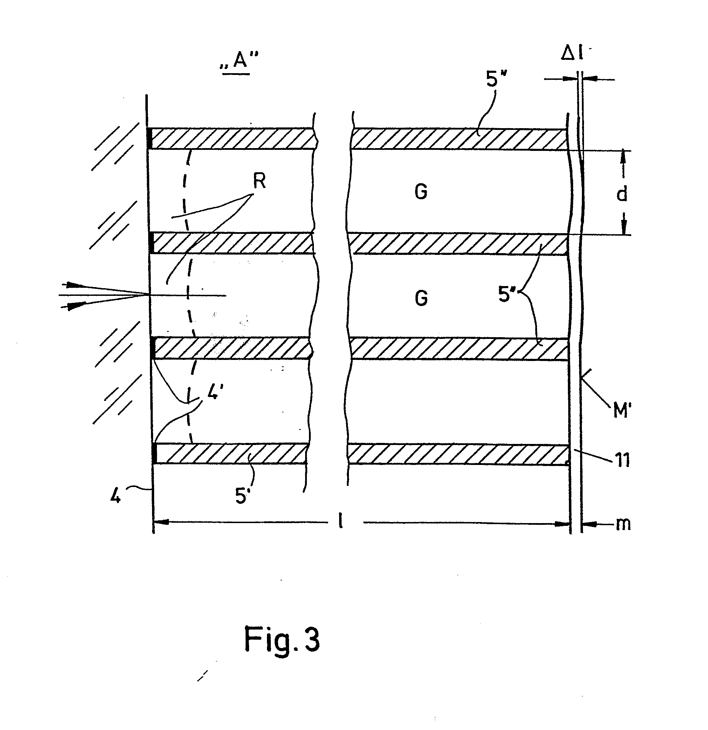

Erhöhung der Bildhelligkeit metallbedampft. Außerdem wird durch die Metallschicht M' (Fig. 3) störende IR-Strahlung reflektiert. Durch die schlechte Wärmeleitung von Glas 5" wird ein "Übersprechen" verhindert. Dem IR-Bild auf der Rückseite der Germanium-Platte 4 entsprechend absorbiert das in den Mikrogaszellen 5' befindliche Gas G oder gegebenenfalls eine Rußschicht R thermische Energie und bewirkt eine Durchbiegung $\Delta$ 1 der Kunststoff-Folie 11.

Die thermische Drift, welche sonst durch Choppen ausgeschaltet wird, kann folgendermaßen unterdrückt werden: Die Germanium-Platte 4, ein Etalon 8 und eine keilförmige Referenzplatte 9 werden mit ihren polierten Oberflächen zusammengesprengt und bilden eine hermetisch dichte Kammer, in welcher sich die Kanalplatte 5 mit den abgeschlossenen Mikrogaszellen befindet. Bei Temperaturschwankungen ändert sich der Druck in den Kapillaren und in der Kammer um den gleichen Betrag. D.h. bei gleichmäßiger Temperaturänderung des gesamten Gerätes ändert sich die Durchbiegung $\Delta$ 1 der Kunststoff-Folie 11 nicht.

Die durch thermische Ausdehnung des Gases verursachte Durchbiegung $\Delta$ 1 der metallbedampften Kunststoff-Folie 11 wird durch ein Interferometer sichtbar gemacht, das Licht einer monochromatischen Lichtquelle 15 über einen Kollektor 14 und durch eine Aperturblende 13 auf einen Strahlenteiler 16 gegeben wird. Die sich auf der keilförmigen Referenzplatte 9 ergebenden Interferenzstreifen werden über einen Kollimator 12 durch das aus Objektiv 17 und Okular 18 bestehende optische System beobachtet. Betrachtet man die Gesamtheit der unterschiedlich durchgebogenen Kapillarendflächen, zeigt sich ein Wärmebild, dessen Helligkeitsverteilung der absorbierten thermischen Energie äquivalent ist.

Wird z.B. durch das Etalon 8, das ein planparallel geschliffener Quarz- oder Invarring mit einer Dichteänderungsschraube 6 sein kann, zwischen Kunststoff-Folie 11
und Referenzplatte 9 eine Parallelität von $< 0,23$ Winkelsekunden eingestellt, kann ein Interferenzstreifen praktisch das ganze Sehfeld ausfüllen.

Die Dicke des Etalons 8 und der Kanalplatte 5 mit Folie 11
sind so aufeinander abgestimmt, daß der Abstand S= $\lambda/4$
oder ein Vielfaches davon ist und sich dadurch eine minimale Untergrundhelligkeit ergibt. Dies geschieht mit den
Schrauben 10 und 6.
Bei Verwendung einer Thalliumlichtquelle 15 erhält man
monochromatisches Licht mit ca. 5 mm Kohärenzlänge. Dadurch
ist auch bei etwas größerem Abstand S die Untergrundhelligkeit des Sehfeldes gering. Ersetzt man die Thalliumlichtquelle 15 durch eine Glühlampe mit Doppel-Linienfilter,
wird die Kohärenzlänge 42 /um, während man mit LED's nur
Kohärenzlängen von 44 /um erreicht. D.h. um die Untergrundhelligkeit möglichst gering zu halten, darf bei diesen einfachen Lichtquellen der Abstand S nur wenige /um betragen.

Der Durchmesser der Aperturblende 13 bestimmt die Helligkeit und den Kontrast des Interferenzbildes. Die Objektive 12 und 17 dienen als Umkehrsystem und erzeugen das
Zwischenbild, welches mit dem Okular 18 betrachtet wird.

Bei einer Brennweite der Germanium-Linse 3 von 100 mm und
einem Durchmesser der Mikrogaszelle von 0,1 mm ergibt sich
ein Auflösungsvermögen von etwa $< 1,5$ mrad.

Bei großer Intensität der einfallenden IR-Strahlung besteht die Gefahr, daß das sichtbare Interferenzbild wieder
dunkler wird bzw. daß irreversible Durchbiegungen auftreten. Dieses kann durch die Irisblende 2 und das Schutzfilter 1 vermieden werden. Für einen ungestörten Bildeindruck soll die Referenzplatte 9 Interferenzqualität aufweisen und die Kunststoff-Folie 11 eine Unparallelität
von $< \lambda /20$ haben.

Ist die Szene z.B. kälter als das Bildwandlergerät, emittiert dieses mehr Strahlung als es empfängt. Dies hat eine
Druckabnahme in den kapillarartigen Mikrogaszellen und
eine Durchbiegung nach innen in die Kapillaren zur Folge.
Für eine solche Durchbiegung $> \lambda /4$ entsteht ein Bild entsprechend der Absorption in der Szene. Soll eine störende
Druckabnahme vermieden werden, muß der Druck in der aus
den Komponenten Germaniumplatte 4, Etalon 8 und Referenzplatte 9 gebildeten Kammer durch Herausdrehen der Schraube 6 verringert werden. Bei langsamer Abkühlung des Bildwandlergeräts ist die Schraube 6 anschließend wieder hereinzudrehen, womit eine Schwellwert-Anpassung erreicht
ist.

Umgekehrt sind die Verhältnisse, wenn die Szene wärmer als
das Bildwandler-Gerät ist. Durch Verdrehen der Schraube 6
wird in der Kammer gleichzeitig eine Dichteänderung und
somit eine Änderung des Gangunterschiedes $\Delta$ verursacht,
was mit den Druckschrauben 10 kompensiert werden kann.
Zwei Annahmen werden gemacht:
1.) Die einfallende IR-Strahlung wird vollständig in der
mit Gas gefüllten Kapillare absorbiert.
2.) In der mit Gas gefüllten Kapillare findet eine isobare
Zustandsänderung statt, d.h. die gesamte Strahlungsenergie
führt zu einer Längenausdehnung.

Für die Längenausdehnung $\Delta$ l der Kapillare gilt:

$$\Delta l = l \gamma \Delta t \qquad (1)$$

bzw. $$\Delta t = \frac{\Delta l}{l \gamma} \qquad (2)$$

wobei l die Länge der mit Gas gefüllten Kapillare $\gamma$ den Volumenausdehnungskoeffizienten und $\triangle t$ die Temperaturänderung bedeutet. Durch die Temperaturerhöhung $\triangle t$ hat die Kapillare die Energiemenge E absorbiert und es ergibt sich die Beziehung:

$$\frac{\triangle l}{E} = \frac{\gamma}{c\,\rho} \cdot \frac{1}{F} = K \cdot \frac{1}{F} \qquad (3),$$

wobei c die spezifische Wärme des Gases, $\rho$ die Dichte des Gases und F die Querschnittsfläche der Kapillare ist.

Die Längenausdehnung $\triangle l$ der Kapillare pro absorbierter Energiemenge E ist nur der Kapillar-Querschnittsfläche F umgekehrt proportional, wobei K eine Materialkonstante des Gases in der Kapillare ist. Diese Materialkonstante ist gleich der Längenausdehnung $\triangle l$ pro Energiedichte E/F bzw. der Nachweisbarkeit von n Photonen pro $mm^2$.

Für Flüssigkeiten ist K nur etwa $10^{-3}$-fach so groß wie für Gase.

Die einfallende IR-Strahlung kann durch eine geschwärzte Schicht in den Mikrogaszellen, welche in Fig. 3 der Rußschicht R entspricht, absorbiert und die Wärme durch Leitung auf das Gas, welches sich ausdehnt, übertragen werden. Die IR-Strahlung kann aber auch direkt von dem Gas absorbiert werden.

Wird z.B. Äthylen - eine ungesättigte Kohlenwasserstoff-Verbindung, die sich leicht mit anderen Substanzen, z.B. Halogenen, verbindet - als absorbierendes Gas gewählt, so ergibt sich bei Einsatz der Werte für c und $\rho$:

$$c = 0.37 \; cal \; gr^{-1} K^{-1} \; bzw.$$
$$\rho = 1,26 \cdot 10^{-6} gr \; mm^{-3}$$

eine Materialkonstante $K = 7250 \; mm^3 \; cal^{-1}$.

Bei geringer Untergrundhelligkeit des Interferometers
(Abstand S ≪ Kohärenzlänge L, Referenzplatte 9 optimal justiert zur Folie 11), tritt bei einem Gangunterschied
$\Delta = \lambda/20$ der Wellenlänge der Lichtquelle 15 eine Helligkeitsänderung von der Untergrundhelligkeit bis 1/40 ($I_{min}$)
der maximal möglichen Helligkeit ($I_{max}$) auf.

Der Gangunterschied $\Delta = \lambda/20$ wird erreicht, wenn die Durchbiegung $\Delta l$ der Kunststoff-Folie 11 $\lambda/40$ beträgt. Nach
der Beziehung

$$\frac{E}{F} = \frac{\Delta l}{K} \tag{4}$$

ergibt sich bei einem kapillaren Durchmesser von 0,1 mm für
die gerade noch nachweisbare Energiedichte bzw. Strahlungsdichte in einer Sekunde unter den Voraussetzungen, daß
alle einfallenden Photonen in der Kapillare absorbiert
werden und eine isobare Zustandsänderung verursachen:

$$\frac{E}{F} = 6,9 \cdot 10^{-9} \frac{Wsek}{mm^2}. \tag{5}$$

Für den Strahlungsdichtenunterschied eines Objektes, welches $1^\circ$ Kelvin wärmer als der Hintergrund ist, müßte bei
dem beschriebenen Beispiel die IR-Bestrahlungsstärke ca.
0,055 sek auf die Kanalplatte (5) fallen, um gerade noch
nachweisbar zu sein, ein Zeitraum der auch relativ schnell
bewegte Wärmeziele noch zu erkennen gestattet.

Patentansprüche:

1.    Wärmebildgerät zur optischen Erkennung von Wärmebildszenen mit pneumatischen IR-Detektoren, dadurch gekennzeichnet, daß ein auf einer IR-durchlässigen Platte angebrachtes, die Wärmebildszene aufnehmendes Mosaik von pneumatischen IR-Detektoren vor einer in ihrer Neigung einstellbaren mit optischem Licht angestrahlten Referenzplatte angeordnet ist, deren Interferenzmuster durch ein optisches System aufgenommen werden.

2.    Wärmebildgerät nach Anspruch 1, dadurch gekennzeichnet, daß die pneumatischen IR-Detektoren aus beidseitig mit Interferenzqualität plangeschliffenen und polierten gasgefüllten Glaskapillaren bestehen.

3.    Wärmebildgerät nach Anspruch 2, dadurch gekennzeichnet, daß als Gas Äthylen verwendet ist.

4.    Wärmebildgerät nach Anspruch 2, dadurch gekennzeichnet, daß die Mikrogaszellen eine wärmeabsorbierende
Schicht, z.B. eine Rußschicht, haben.

5.    Wärmebildgerät nach einem der vorhergehenden Ansprüche, dadurch gekennzeichnet, daß das optische System
einen Okular-Einblick enthält.

0010324

Fig. 1

Fig. 2

001

Fig. 3

0010324

Nummer der Anmeldung

**Europäisches Patentamt**

# EUROPÄISCHER RECHERCHENBERICHT

EP 79 20 0560

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US - A - 2 424 976 (M. GOLAY et al.)<br>* Spalten 3-5; Figuren 2,5 * | 1,4,5 |
| A | FR - A - 1 007 113 (O.N.E.R.A.)<br>* Seiten 2,3 * | 1,4,5 |
| A | US - A - 3 073 957 (H. JONES)<br>* Spalte 2; Figur 1 * | 1,4 |
| A | GB - A - 664 362 (O.N.E.R.A.)<br>* Seite 2; Figuren 4-6 * | 1,4 |
| A | FR - A - 1 137 251 (C. FEVROT et al.)<br>* Seite 2; Figur 2 * | 1,4 |
| A | FR - A - 2 224 750 (PLESSEY HANDEL U. INVESTMENTS)<br>* Seiten 1,2; Figuren 1,2 * | 1,2 |
| A | US - A - 3 551 051 (F. SALGO)<br>* Spalten 4-6; Figur 4 * | 1,4 |

**KLASSIFIKATION DER ANMELDUNG (Int.Cl. 3)**

G 01 J 5/42
G 02 B 23/12

**RECHERCHIERTE SACHGEBIETE (Int. Cl. 3)**

G 01 J 5/42
G 02 B 23/12
G 01 B 9/02
G 02 B 27/38

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-01-1980 | BOEHM |

EPA form 1503.1   06.78